# EUROPEAN PATENT APPLICATION

(11) **EP 1 767 918 A1**
(43) Date of publication of application: **28.03.2007**
(21) Application number: 06019251.5
(22) Date of filing: 14.09.2006
(51) Int. Cl.: G01M 13/04, G01H 1/00, H01S 3/036

(54) **Blower for a laser oscillator and laser oscillator using the same**

(30) Priority: 26.09.2005 JP 2005278343
(71) Applicant: FANUC LTD, Minamitsuru-gun, Yamanashi 401-0597 (JP)
(72) Inventor: Ohta, Kazuya, Fujiyoshida-shi Yamanashi 403-0002 (JP); Egawa, Akira, Gotenba-shi Shizuoka 412-0043 (JP); Mori, Atsushi, Minamitsuru-gun Yamanashi 401-0301 (JP)
(74) Representative: Thum, Bernhard

(57) **Abstract**

A blower (10) includes: at least two or at least three acoustic sensors or vibration sensors (31a to 31c) attached to a casing (12); and a position specifying means (34) for specifying a position of a source of abnormal sound or abnormal vibration from signals detected by the acoustic sensors or vibration sensors. When the position of the abnormal portion is specified in this way, a proper countermeasure can be taken quickly. Further, the blower (10) preferably includes an alarm output judging means (35) for judging whether or not an alarm should be outputted according to the position of the source of the abnormal sound or abnormal vibration specified by the position specifying means. A laser oscillator (100) having the blower (10) is also provided.

## Description

### BACKGROUND OF THE INVENTION

### 1. Field of the Invention

The present invention relates to a blower for a laser oscillator. More particularly, the present invention relates to a blower for a laser oscillator which is used for circulating a laser medium in a laser oscillator such as a chemical laser or gas laser, the laser medium of which is gas. Further, the present invention relates to a laser oscillator having such a blower.

### 2. Description of the Related Art

Recently, laser oscillators have been used in the fields of laser processing, medical treatment, illumination and communication. These laser oscillators include chemical laser oscillators and a gas laser oscillators in which a gas is used as a laser medium. In the gas laser oscillator, a laser medium, for example, carbon dioxide is circulated between an electric discharge tube and a heat exchanger so as to maintain the carbon dioxide laser medium at a proper temperature.

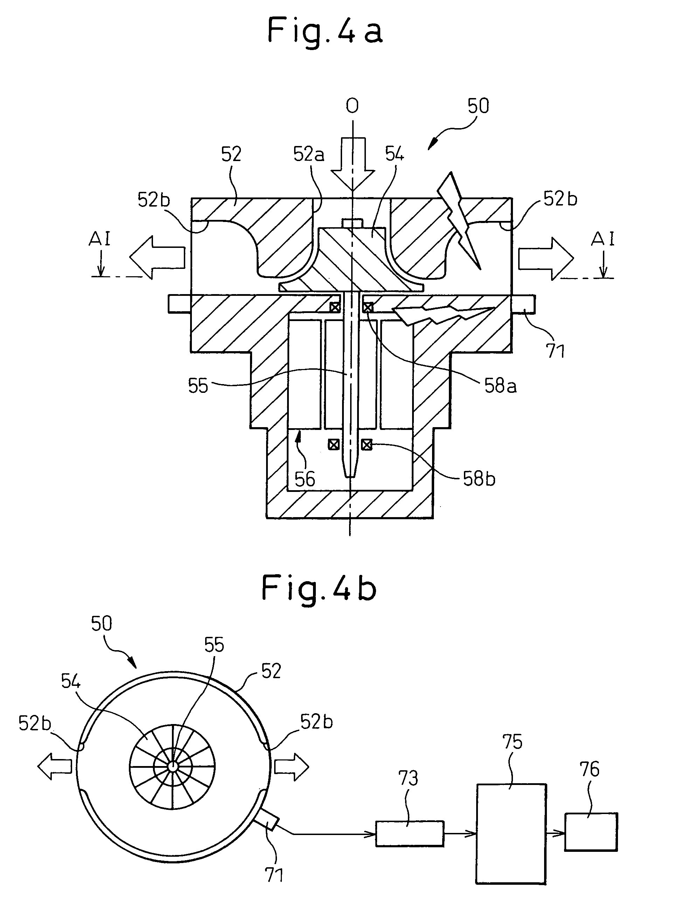

Fig. 4a is a sectional view taken in the axial direction of a centrifugal type blower used for a laser oscillator of the prior art. Fig. 4b is a sectional view taken on line A1 - A1 in Fig. 4a. As shown in Fig. 4a, in a casing 52 of a blower 50 of the prior art, a suction port 52a and two exhaust ports 52b are formed. As shown in the drawing, the two exhaust ports 52b are arranged perpendicularly to the central axis O of the blower 50 and further directed in opposite directions. Further, a blade 54, which is attached to a rotary shaft 55 of a drive motor 56 and rotatably supported about the central axis O, is provided in the casing 52. The rotary shaft 55 of the drive motor 56 is rotatably supported by two bearings 58a, 58b.

The above blower 50 incorporated in the laser oscillator is usually rotated at a speed of not less than 10,000 rpm. Accordingly, in the case where the blower 50 is used over a long period of time, the bearings 58a, 58b are abraded. Due to the abrasion, the bearings 58a, 58b and the rotary shaft 55 may suddenly seize and be broken, in some cases. In this case, impurities flow into a resonator through a portion at which the broken bearings are located. Accordingly, not only the inside of the resonator is polluted but, also, the laser oscillator can not be restarted. In order to restore the laser oscillator to its original state, it is necessary to replace the bearings 58a, 58b and others and further it is necessary to discharge the impurities from the inside of the resonator, which takes a long time.

In order to solve the above problems, a single vibration sensor 71 for detecting vibration of the blower 50 is attached to the blower 50 of the prior art disclosed in Japanese Unexamined Patent publication No. 5-90661. A vibration detection signal sent from the vibration sensor 71 is amplified by an amplifier 73 and supplied to an alarm judging means 75. In the alarm judging means 75, it is judged whether or not a peak value of the vibration detection signal, which is amplified by the amplifier 73, exceeds a threshold value. When a number of times, in which the peak value exceeds the threshold value, exceeds a predetermined number, an alarm is outputted from an alarm device 76. Accordingly, by repairing or replacing broken bearings and others after the alarm has been outputted, it is possible to prevent the bearings 58a, 58b of the drive motor 56 from being seized and broken.

A blower disclosed in Japanese Unexamined Patent Publication No. 11-87820 includes a motor current detector for detecting a motor current flowing in a drive motor. In the case where the intensity of the motor current detected by the motor current detector suddenly increases and, for example, in the case where an intensity of the motor current detected by the motor current detector exceeds a threshold value, it is judged that the blower life is nearly ended, and an alarm is outputted.

However, in some cases vibration and/or noise is detected at a portion other than the bearings 58a, 58b which tend to be damaged. Further, vibration and/or noise, which is transmitted from the outside of the blower, is detected in some cases. As described before, the blower disclosed in Japanese Unexamined Patent Publication No. 5-90661 includes only one vibration sensor 71. In this structure, it is impossible to specify the source of abnormal vibration. Accordingly, it is possible to encounter the following circumstances. In the case where the source of vibration and/or noise exists outside the blower, even if the blower is disassembled after the alarm has been outputted, no problems are found at the bearings arranged in the blower.

In the case of the blower disclosed in Japanese Unexamined Patent Publication No. 11-87820, the following circumstances may be encountered. An intensity of the electric current is not so increased just before replacing the bearings, and the intensity of the electric current is changed according to the purity and temperature of a laser medium. By only a change in the electric current, it is impossible to judge where an abnormality is caused. Therefore, the same problem as that described above can be caused.

That is, in the cases described in Japanese Unexamined Patent Publication No. 5-90661 and Japanese Unexamined Patent Publication No. 11-87820, even when an alarm is outputted, an operator can only know that there is some problem in the device. Therefore, it is necessary for the operator to disassemble the blower and to specify an abnormal portion. The countermeasure to be taken is different according to a specified portion where the abnormality has occurred. Therefore, when only an alarm, indicating the occurrence of the abnormality, has been outputted, it is impossible for the operator to quickly and properly take a countermeasure against the abnormality.

The present invention has been accomplished in view of the above circumstances. It is an object of the present invention to provide a blower for a laser oscillator capable of specifying the position where an abnormality has occurred so that a countermeasure can be taken against the abnormality. It is another object of the present invention to provide a laser oscillator into which the blower is incorporated.

### SUMMARY OF THE INVENTION

In order to accomplish the above object, the first aspect provides a blower comprising: a casing in which a suction port and at least one exhaust port are formed; a drive motor having a rotary shaft rotated via bearings in the casing; a blade rotatably supported about the rotary shaft in the casing in such a manner that the blade faces the suction port and the exhaust port; at least two acoustic sensors or vibration sensors attached to the casing; and a position specifying means for specifying a position of a source of abnormal sound or abnormal vibration from a signal detected by the acoustic sensors or vibration sensors.

That is, in the first aspect, from the signals detected by the acoustic sensors or the vibration sensors, a source abnormal sound and others can be specified by the position specifying means, that is, it is possible to specify a two-dimensional position of the abnormal portion. An operator can judge that this two-dimensional position is a portion to be replaced or repaired. Therefore, it is possible for the operator to quickly take a proper countermeasure against the abnormality. Accordingly, it becomes possible to enhance the reliability and the maintenance of the blower.

The second aspect provides a blower comprising: a casing in which a suction port and at least one exhaust port are formed; a drive motor having a rotary shaft rotated via bearings in the casing; a blade rotatably supported about the rotary shaft in the casing in such a manner that the blade faces the suction port and the exhaust port; at least three acoustic sensors or vibration sensors attached to the casing; and a position specifying means for specifying a position of a source of abnormal sound or abnormal vibration from a signal detected by the acoustic sensors or vibration sensors.

That is, in the second aspect, with the signals detected by the acoustic sensors or the vibration sensors, a position of the source of generating the abnormal sound can be specified by the position specifying means, that is, it is possible to specify a three-dimensional position of the abnormal portion. An operator can judge that this three-dimensional position is a portion to be replaced or repaired. Therefore, it is possible for the operator to quickly take a proper countermeasure against the abnormality. Accordingly, it becomes possible to enhance the reliability and the maintenance of the blower.

According to the third aspect, a blower of the first or the second aspect further comprises an alarm output judging means for judging whether or not an alarm is to be outputted according to a position, of a source at which the abnormal sound or abnormal vibration is generated, specified by the position specifying means.

In the third aspect, in the case where a source of generating abnormal sound is located in a portion which affects the reliability of the blower, for example, in the case where a source of generating abnormal sound is located at the bearing arranged in the blower, an alarm is outputted, so that the blower can be previously prevented from being damaged. On the other hand, in the case where a source of generating abnormal sound is located in a portion which does not affect the reliability of the blower, for example, in the case where a source of generating abnormal sound is located in an external member of the blower, no alarm is outputted, so that a rate of operation of the blower is not lowered.

According to the fourth aspect, in one of the first to the third aspect, the distances between the respective acoustic sensors or vibration sensors, which are attached to the casing, and the rotary shaft are equal.

That is, in the fourth aspect, in the case of the occurrence of an abnormality in the rotary body, which is a portion especially affecting the reliability of the device, it is possible to accurately specify a three-dimensional position of the abnormal portion.

According to the fifth aspect, in one of the first to the fourth aspect, the position specifying means, for specifying a position of a source of the abnormal sound or abnormal vibration, specifies the position of the source of the abnormal sound or abnormal vibration by a time difference of signals or by a phase difference of signal wave-forms sent from the acoustic sensors or vibration sensors and by a mutual correlation with respect to the signal, the time difference and the phase difference.

That is, in the fifth aspect, a two-dimensional position or a three-dimensional position of the abnormal portion can be properly specified.

The sixth aspect provides a laser oscillator comprising a blower according to one of the first to the fifth aspects.

The objects, characteristics and advantages of the present invention will become apparent from the detailed explanations of the typical embodiment of the present invention shown in the accompanying drawings.

### BRIEF DESCRIPTION OF THE DRAWINGS

Fig. 1a is a sectional view taken in the axial direction of a blower for a laser oscillator of the present invention.
Fig. 1b is a sectional view taken on line A - A in Fig. 1a.
Fig. 2 is a schematic drawing of a laser oscillator having a blower of the present invention.
Fig. 3 is a flow chart of a judgment program of an alarm output judging means provided in a blower of the present invention.
Fig. 4a is a sectional view taken in the axial direction of a blower for a laser oscillator of the prior art.
Fig. 4b is a sectional view taken on line A1 - A1 in Fig. 4a.

### DETAILED DESCRIPTION

Referring to the accompanying drawings, an embodiment of the present invention will be explained below. In the following drawings, like reference characters are used to indicate like parts. In order to facilitate the understanding, the scale is appropriately changed in these drawings.

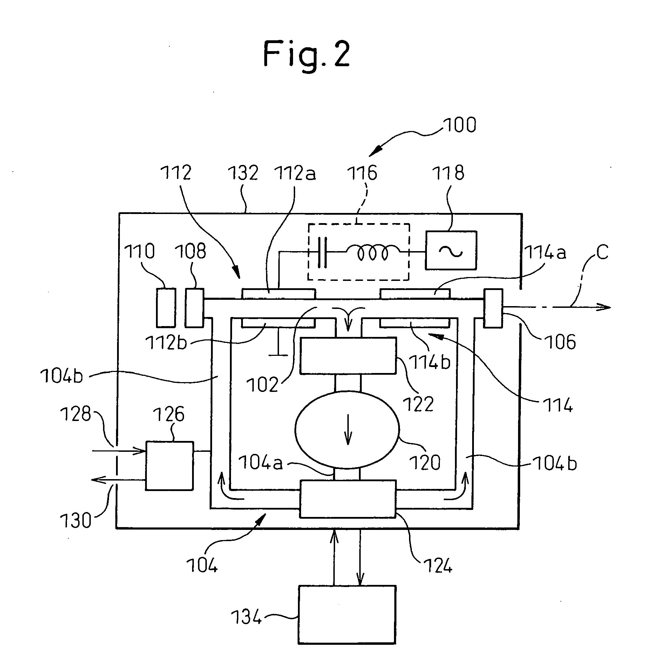

First of all, referring to Fig. 2, a laser oscillator having a blower of the present invention will be explained as follows. In Fig. 2, as an example of the laser oscillator to which the present invention is applied, a gas laser oscillator of a relatively high output, which is of the induction-discharge-exciting-type, is shown. For example, a carbon dioxide gas laser oscillator 100 is shown. The laser oscillator 100 includes: a discharge tube 102; and a circulation passage 104 including a suction pipe 104a for sucking a laser medium, which is gas, from substantially a central portion in the longitudinal direction of the discharge tube 102 and a return pipe 104b for discharging the laser medium to portions of the discharge tube 102 adjacent to both end portions of the same. At a forward end portion of the discharge tube 102, an output mirror 106 is arranged. At a rear end portion of the discharge tube 102, a rear mirror 108 is arranged. Therefore, an optical resonance space is formed between the output mirror 106 and the rear mirror 108. At the rear of the rear mirror 108, a laser power sensor 110 is arranged.

In a portion of the discharge tube 102 adjacent to the rear mirror 108, a first discharge section 112 is provided which includes discharge electrodes 112a, 112b arranged opposed to each other with respect to the discharge tube 102. The first discharge section 112 is connected to a laser electric power source 118 via a matching circuit 116. Further, in a portion of the discharge tube 102 adjacent to the output mirror 106, a second discharge section 114 is provided which includes discharge electrodes 114a, 114b arranged opposed to each other with respect to the discharge tube 102. In this connection, although not particularly shown in Fig. 2, the second discharge section 114 is also connected to a laser electric power source via a matching circuit in the same manner as that described above.

In the suction pipe 104a of the circulating passage 104, a blower 120 for circulating the laser medium is arranged. On the suction side and the discharge side of the blower 120 in the suction pipe 104a of the circulating passage 104, a first and a second heat exchanger 122, 124 are respectively arranged. A gas supply tube 128 and a gas discharge tube 130 are respectively connected to the return pipes 104b of the circulating passage 104 through a gas pressure control device 126. The gas pressure control device 126 controls the discharge and supply of the laser gas so that the pressure in the discharge tube 102 and in the circulating passage 104 can be maintained at a proper value.

The above components of the laser oscillator can be housed in the casing 132. The laser oscillator 100 is connected to a cooling water system 134 provided outside the casing 132. Therefore, the laser medium can be appropriately cooled through the heat exchangers 122, 124 so as to maintain the temperature of the laser medium at a proper value.

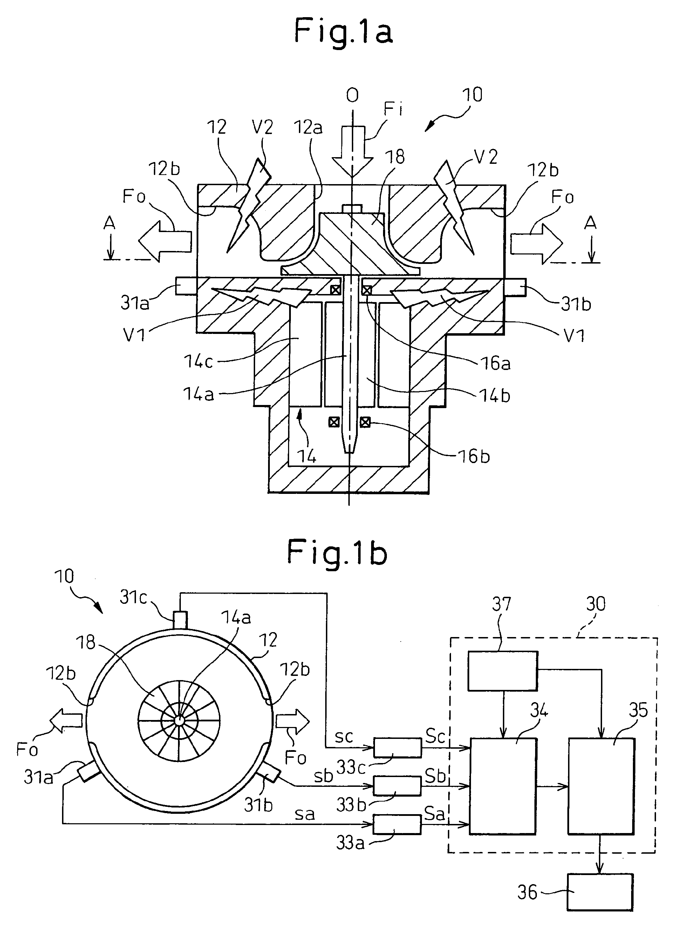

Fig. 1a is a sectional view taken in the axial direction of a blower for a laser oscillator of the present invention. Fig. 1b is a sectional view taken on line A - A in Fig. 1a. Referring to these drawings, the blower of the present invention will be explained below. The blower 10 shown in Figs. 1a and 1b is the same as the blower 120 shown in Fig. 2 which is used for the laser oscillator 100. The blower 10 includes a substantially cylindrical casing 12 in which one suction port 12a and two exhaust ports 12b are formed. As shown in Fig. 1b, these exhaust ports 12b are formed perpendicularly to the central axis O and in the opposite direction to each other.

A drive motor 14 arranged in the casing 12 includes: a rotary shaft 14a extending along the central axis O of the casing 12; a rotor 14b fixed to the rotary shaft 14a; and a stator 14c which faces the rotor 14b and is fixed onto an inner face of the casing 12. As shown in the drawing, the rotary shaft 14a is rotatably supported by bearings 16a, 16b arranged in the casing 12. At a forward end portion of the rotary shaft 14a, a blade 18 is arranged.

As can be seen in Figs. 1a and 1b, in the present invention, three vibration sensors 31, 31b, 31c are attached to an outer circumferential portion of the casing 12. These vibration sensors 31, 31b, 31c are attached at regular intervals in the circumferential direction right below the exhaust ports 12b. Accordingly, distances from the respective vibration sensors 31a, 31b, 31c to the rotary shaft 14a are equal to each other. It is preferable that the vibration sensors 31a, 31b, 31c are attached at the same height as shown in the drawing. However, these vibration sensors 31a, 31b, 31c may be respectively attached at positions, the heights of which are different.

As shown in Fig. 1b, the respective vibration sensors 31a, 31b, 31c are connected to the corresponding amplifiers 33a, 33b, 33c. Further, these amplifiers 33a, 33b, 33c are connected to a control unit 30 for controlling the laser oscillator 100 including the blower 10. As shown in the drawing, the control unit 30 includes: a position specifying means 34 for specifying the position of a source of abnormal vibration; an alarm output judging means 35 for judging whether or not an alarm is outputted from the alarm device 36; and a storage means 37 such as a memory. Strictly speaking, the amplifiers 33a, 33b, 33c are connected to the position specifying means 34 of the control unit 30. The storage means 37 stores a judging program (described later) of the alarm output judging means 35 in addition to the precise dimensional data of the blower 10.

At the time of operation of the blower 10, by rotating the blade 18, gas is sucked from the suction port 12a along the central axis O as shown by the arrow Fᵢ. At the same time, the thus sucked gas is discharged from the two exhaust ports 12b as shown by the arrow Fₒ. The vibration sensors 31a, 31b, 31c attached to the casing 12 always detect vibration generated at the time of operation of the blower 10. Vibration signals sa, sb, sc, which are produced by the vibration sensors 31a, 31b, 31c, are amplified by the corresponding amplifiers 33a, 33b, 33c. After that, the vibration signals are supplied to the position specifying means 34 of the control unit 30 as amplified vibration signals Sₐ, S_{b}, S_{c}.

When the blower 10 operates normally, the vibration signals Sₐ, S_{b}, S_{c} are in a predetermined range. However, in the case where the vibration signals Sₐ, S_{b}, S_{c} exceed a predetermined range, that is, in the case where an abnormal vibration is detected, the position specifying means 34 conducts the following process.

The position specifying means 34 calculates a time difference among the vibration signals Sₐ, S_{b}, S_{c} and also calculates a phase difference among the wave-shapes of the vibration signals Sₐ, S_{b}, S_{c}. Further, the position specifying means 34 conducts statistical processing by a cross-correlation with respect to the vibration signals, the time differences and the phase differences. A result obtained by the statistical processing is calculated with a predetermined calculating expression in relation to the dimensional data of the blower 10 stored in the storage means 37. According to the result of the calculation, a three-dimensional position of the source of generating the abnormal vibration can be specified. Especially, in the embodiment shown in the drawing, as the three vibration sensors 31a, 31b, 31c are attached to the outer circumference of the casing 12 at regular intervals and at the same height, the three-dimensional position of the source of the abnormal vibration can be easily specified. In this connection, it is possible to adopt a structure in which two vibration sensors are attached to the outer circumference of the casing 12 at the same height. Even in this structure, it is possible to specify a two-dimensional position with respect to the source of the abnormal vibration.

The three-dimensional position or the two-dimensional position of the source of the abnormal vibration, that is, the positional information of the source of the abnormal vibration is supplied to the alarm output judging means 35. When the positional information of the abnormal vibration is supplied, the alarm output judging means 35 supplies an alarm output command to the alarm device 36. Therefore, an alarm is outputted from the alarm device 36. It is preferable that the positional information of the abnormal portion is simultaneously outputted at this time onto a monitor not shown. Due to the foregoing, a portion to be replaced or repaired is indicated to an operator. Therefore, it is possible for the operator to quickly take a proper appropriate countermeasure against the problem.

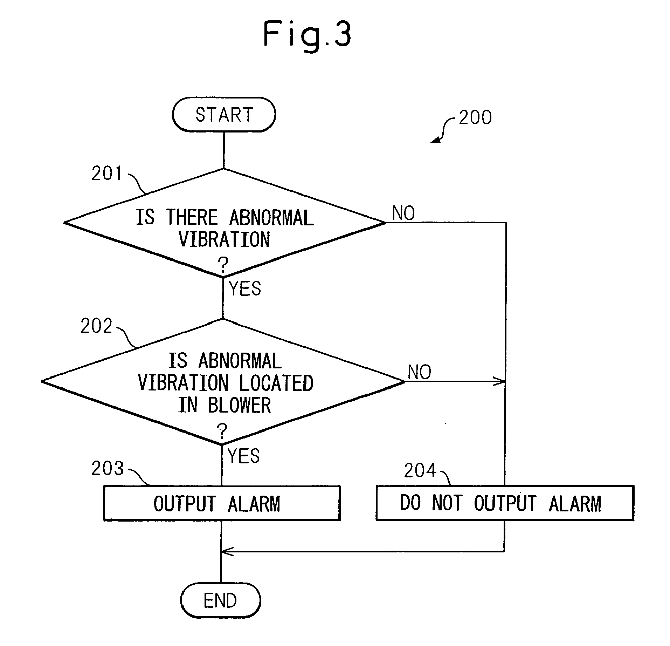

The alarm output judging means 35 may judge whether or not an alarm is outputted according to the positional information of the source of the abnormal vibration. Fig. 3 is a flow chart of a judgment program of the alarm output judging means 35 used in this case. In step 201 of the program 200 shown in Fig. 3, it is judged whether or not abnormal vibration is generated, that is, whether or not the positional information of abnormal vibration is supplied to the alarm output judging means 35. In the case where no abnormal vibration is generated, the program proceeds to step 204 and finishes without outputting an alarm.

On the other hand, in the case where abnormal vibration is generated, the program proceeds to step 202. Then, it is judged according to the positional information of the abnormal vibration whether or not the source of the abnormal vibration is located inside the blower 10. This can be easily judged by comparing the dimensional data of the blower 10 stored in the storage means 37 with the positional information. In the case where the source of the abnormal vibration is located inside the blower 10 and, for example, in the case where the abnormal vibration V1 is generated from the bearing 16a as shown in Fig. 1a, the program proceeds to step 203, and an alarm is outputted from the alarm device 36.

As the bearing 16a arranged inside the blower 10 has a great influence on the reliability of the blower 10, in the case where the bearing 16a is an abnormal portion, an alarm is outputted so that an operator can note the occurrence of an abnormality in the bearing 16a. Due to the foregoing, it is possible for the operator to prevent the blower from being damaged. In the case described above, it is possible for the operator to check the blower 10 before the bearing is broken. Therefore, the laser oscillator 100 will not have been polluted and the blower 10 can be repaired in a relatively short period of time.

On the other hand, in the case where the source of the abnormal vibration is not located inside the blower 10, for example, in the case where the abnormal vibration V2 (shown in Fig. 1a) is generated from an external device (not shown) located outside the blower 10, the program proceeds to step 204. Then, the program finishes without outputting an alarm. That is, in the case where an abnormal vibration is generated from an external device located outside the blower 10, this abnormal vibration does not influence the reliability of the blower 10. Therefore, it is preferable that no alarm is outputted in this case. Accordingly, the rate of operation of the blower is not lowered.

However, in this case, there is a high possibility that an abnormality is generated in the external device. Therefore, in the case where the source of generating an abnormal vibration is not located inside the blower 10, an alarm different from the alarm of step 203 may be outputted. In this way, the abnormal vibration of the external device arranged outside the blower 10 can be indicated to the operator.

In the embodiment explained above by referring to the drawings, the source of the abnormal vibration is specified by the vibration sensor. However, it is possible to adopt a structure, in which an acoustic sensor is used to specify the source of abnormal noise, instead of the vibration sensor. It is clear that the same effect as that described above can be provided in this case.

The present invention has been explained above by the typical embodiment. However, it can be understood that variations, omissions and additions may be made, by those skilled in the art, without departing from the scope of the claims of the present invention.

## Claims

1. A blower comprising:
a casing (12) in which a suction port (12a) and at least one exhaust port (12b) are formed;
a drive motor (14) having a rotary shaft (14a) rotating via bearings (16a, 16b) in the casing (12); and
a blade (18) rotatably supported about the rotary shaft (14a) in the casing (12) in such a manner that the blade (18) faces the suction port (12a) and the exhaust port (12b),
the blower (10) further comprising:
at least two acoustic sensors or vibration sensors (31a, 31b, 31c) attached to the casing (12); and
a position specifying means (34) for specifying a position of a source of abnormal sound or abnormal vibration (V1, V2) from a signal detected by the acoustic sensors or vibration sensors (31a, 31b, 31c).

2. A blower comprising:
a casing (12) in which a suction port (12a) and at least one exhaust port (12b) are formed;
a drive motor (14) having a rotary shaft (14a) rotating via bearings (16a, 16b) in the casing (12); and
a blade (18) rotatably supported about the rotary shaft (14a) in the casing (12) in such a manner that the blade (18) faces the suction port (12a) and the exhaust port (12b),
the blower (10) further comprising:
at least three acoustic sensors or vibration sensors (31a, 31b, 31c) attached to the casing (12); and
a position specifying means (34) for specifying a position of a source of abnormal sound or abnormal vibration (V1, V2) from a signal detected by the acoustic sensors or vibration sensors (31a, 31b, 31c).

3. A blower according to claim 1 or 2, further comprising an alarm output judging means (35) for judging whether or not an alarm is outputted according to the position of a source of the abnormal sound or abnormal vibration (V1, V2), specified by the position specifying means (34).

4. A blower according to one of claims 1 to 3, wherein the distances between the respective acoustic sensors or vibration sensors (31a to 31c), which are attached to the casing (12), and the rotary shaft (14a) are equal.

5. A blower according to one of claims 1 to 4, wherein the position specifying means (34) for specifying a position of a source of abnormal sound or abnormal vibration (V1, V2) specifies the position of the source of the abnormal sound or abnormal vibration (V1, V2) by the time difference between signals or by a phase difference between signal wave-forms sent from the acoustic sensors or vibration sensors (31a to 31c) or by and by a cross-correlation with respect to the signal, the time difference and the phase difference.

6. A laser oscillator (100) comprising a blower (10) according to one of claims 1 to 5.
